# EUROPEAN PATENT APPLICATION

(11) **EP 4 650 167 A1**
(43) Date of publication of application: **19.11.2025**
(21) Application number: 24741521.9
(22) Date of filing: 09.01.2024
(51) Int. Cl.: B32B 27/00, B32B 27/32, B65D 65/40

(54) **GAS-BARRIER LAMINATE, PACKAGING CONTAINER, AND PACKAGING PRODUCT**

(30) Priority: 11.01.2023 JP 2023002687
(71) Applicant: Toppan Holdings Inc., Tokyo 110-0016 (JP)
(72) Inventor: TANAKA, Ayumi, Tokyo 110-0016 (JP); FUKUGAMI, Miki, Tokyo 110-0016 (JP)
(74) Representative: Hoffmann Eitle
(86) International application number: PCT/JP2024/000204
(87) International publication number: WO 2024/150748

(57) **Abstract**

A gas barrier laminate includes a substrate layer, an intermediate layer, a barrier layer, and a sealant layer in this order. The substrate layer, the intermediate layer, and the sealant layer are each made of a resin film, and the barrier layer has a gas barrier coating layer. The hardness of the gas barrier coating layer in a cross section as measured by nanoindentation is less than 0.75 GPa.

## Description

### [Technical Field]

The present invention relates to a gas barrier laminate, a packaging container, and a packaged product.

### [Background Art]

Packaging containers, such as packaging bags used to package food products or pharmaceutical products are required to have gas barrier properties for protecting the contents from moisture, oxygen, and other gases that may degrade the contents in order to protect the contents from degradation and decay and retain the functions and nature of the contents. For this reason, gas barrier laminates have been conventionally used in these packaging bags.

One known type of these gas barrier laminates includes a substrate layer, an inorganic oxide layer, a gas barrier coating layer, and a sealant layer in this order. For example, PTL 1 specified below discloses a laminate including a first substrate layer, a second substrate layer, and a sealant layer in this order, wherein the first substrate layer, the second substrate layer, and the sealant layer all include a polyolefin film; the polyolefin film of the first or second substrate layer includes an inorganic oxide layer and a gas barrier coating layer on at least one surface thereof in this order; and each of the first substrate layer, the second substrate layer, and the sealant layer has a heat shrinkage rate, in a travel direction (MD direction) after heating at 120°C for 15 minutes, which satisfies a predetermined relationship.

### [Citation List]

### [Patent Literature]

[PTL 1] JP 2021-20391 A

### [Summary of the Invention]

### [Technical Problem]

However, the laminate described in PTL 1 still has room for improvement in terms of durability and, after sterilization at high temperatures of 121°C or higher (hereinafter also referred to as "high retort treatment"), gas barrier performance.

The present disclosure has been made in consideration of the above-described problems, and an object thereof is to provide a gas barrier laminate, a packaging container, and a packaged product that can have good durability and maintain good gas barrier performance even after high retort treatment.

### [Solution to Problem]

The inventors of the present disclosure conducted intensive studies to solve the above-described problems. As a result, the inventors have found that the above-described problems can be solved by, in a laminate including a substrate layer, a barrier layer having a gas barrier coating layer, and a sealant layer, providing an intermediate layer between the substrate layer and the barrier layer; forming the substrate layer, the intermediate layer, and the sealant layer from resin films; and making the hardness of a cross section of the gas barrier coating layer as measured by nanoindentation less than a specific value, which has led to the present disclosure.

That is, an aspect of the present disclosure provides a gas barrier laminate including a substrate layer, an intermediate layer, a barrier layer, and a sealant layer in this order, in which the substrate layer, the intermediate layer, and the sealant layer are each made of a resin film, the barrier layer has a gas barrier coating layer, and a hardness of the gas barrier coating layer in a cross section as measured by nanoindentation is less than 0.75 GPa.

This gas barrier laminate can have good durability and maintain good gas barrier performance even after high retort treatment.

The reason why these effects are provided by the above gas barrier laminate is not clear, but the inventors of the present disclosure consider that it is due to the following reason.

That is, in a case where the gas barrier laminate is used to form a packaging container, the sealant layer is placed on the inside and the substrate layer is placed on the outside. If the packaging container is subjected to high retort treatment or is deformed, a large stress is likely to be applied to the substrate layer. When the barrier layer is not provided directly on the substrate layer but is provided indirectly via an intermediate layer, the stress applied to the substrate layer is mitigated by the intermediate layer before reaching the gas barrier coating layer of the barrier layer. Since the hardness of the gas barrier coating layer in a cross section is less than 0.75 GPa, the gas barrier coating layer can have flexibility. Therefore, even if excessive stress is applied to the gas barrier coating layer from the substrate layer via the intermediate layer, the excessive stress is mitigated by the gas barrier coating layer. Therefore, cracks are less likely to be formed in the gas barrier coating layer. In particular, since the gas barrier laminate includes the substrate layer, the intermediate layer, the barrier layer, and the sealant layer in this order, and the barrier layer includes the gas barrier coating layer, the gas barrier coating layer is likely to be located close to a stress concentration (part where stress is likely to concentrate) near the middle part of the laminate (part equidistant from both sides). The stress applied to the gas barrier laminate is effectively mitigated because the hardness of the gas barrier coating layer in a cross section is less than 0.75 GPa. The inventors of the present disclosure consider that for this reason the gas barrier laminate can provide the above effects.

In the gas barrier laminate, the hardness of the gas barrier coating layer in the cross section as measured by nanoindentation may be 0.1 GPa or more.

When the hardness of the gas barrier coating layer in a cross section is 0.1 GPa or more, the thermal shock resistance of the gas barrier coating layer is improved, and therefore the gas barrier coating layer is less likely to deteriorate due to high retort treatment or the like.

In the gas barrier laminate, the resin film may include a polypropylene-based resin, and the resin film comprising the substrate layer and the intermediate layer among the substrate layer, the intermediate layer, and the sealant layer may be each comprised of a stretched film.

In that case, since the resin films forming the substrate layer, the intermediate layer, and the sealant layer contain a polypropylene-based resin, the recyclability of the gas barrier laminate is further improved. Further, since the substrate layer and the intermediate layer are stretched films, the strength of the gas barrier laminate is further improved. Therefore, reduced stress is applied to the gas barrier coating layer when the gas barrier laminate is subjected to high retort treatment as part of a packaging container, or when it is deformed as part of a packaging container, so that cracks are less likely to be formed in the gas barrier coating layer and the barrier performance of the gas barrier laminate is further improved.

In the gas barrier laminate, an atomic ratio of silicon atoms to carbon atoms (Si/C) on a surface of the gas barrier coating layer as measured by X-ray photoelectron spectroscopy (XPS) may be less than 0.80.

This makes it possible to further improve the durability of the gas barrier laminate.

In the gas barrier laminate, an atomic ratio of silicon atoms to carbon atoms (Si/C) on a surface of the gas barrier coating layer as measured by X-ray photoelectron spectroscopy (XPS) may be less than 0.50.

This makes it possible to effectively improve the durability of the gas barrier laminate.

In the gas barrier laminate, the gas barrier coating layer may be formed using a composition for forming the gas barrier coating layer that contains a first silicon compound and a water-soluble macromolecule, and the first silicon compound may include at least one of a silane alkoxide represented by a following general formula (1) and a hydrolysate thereof.

Si(OR¹)₄ ...(1)

(In the general formula (1), R¹ represents an alkyl group.)

In the gas barrier laminate, the composition for forming the gas barrier coating layer may further contain a second silicon compound, and the second silicon compound may include at least one of a silane coupling agent represented by a following general formula (2) and a hydrolysate thereof.

(R²Si(OR³)₃)ₙ ......(2)

(In the above general formula (2), R² represents a monovalent organic group, OR³ represents an alkyl group or -C₂H₄OCH₃, and n represents an integer greater than or equal to 1.)

This facilitates suppressing delamination in the gas barrier laminate.

In the gas barrier laminate, the gas barrier coating layer preferably has a thickness of more than 50 nm and less than 700 nm.

In that case, the gas barrier laminate can have better durability and maintain good gas barrier performance even after high retort treatment.

In the gas barrier laminate, the barrier layer may further include an inorganic oxide layer between the intermediate layer and the gas barrier coating layer.

In that case, the gas barrier laminate can have a further improved gas barrier performance by having the inorganic oxide layer.

In the gas barrier laminate, the inorganic oxide layer preferably has a thickness of more than 5 nm and less than 80 nm.

In that case, compared to when the thickness of the inorganic oxide layer falls outside this range, the gas barrier laminate can have better durability and maintain better gas barrier performance even after high retort treatment.

The gas barrier laminate preferably further includes an anchor coat layer between the intermediate layer and the inorganic oxide layer.

This improves the adhesion between the intermediate layer and the inorganic oxide layer.

In the gas barrier laminate, the anchor coat layer preferably has a thickness of more than 50 nm and less than 300 nm.

When the thickness of the anchor coat layer is more than 50 nm, the gas barrier performance after high retort treatment can be further improved compared to when the thickness of the anchor coat layer is 50 nm or less. This also further improves the durability of the gas barrier laminate. When the thickness of the anchor coat layer is less than 300 nm, the durability of the gas barrier laminate can be further improved, and also the gas barrier performance after high retort treatment can be further improved, compared to when the thickness of the anchor coat layer is 300 nm or more.

Another aspect of the present disclosure provides a packaging container including the above gas barrier laminate.

Since this packaging container includes the gas barrier laminate, it can have good durability and maintain good gas barrier performance even after high retort treatment. Therefore, when the packaging container is sealed with contents disposed therein, deterioration of the quality of the contents due to oxygen ingress can be suppressed for a long period of time. Further, deterioration of the gas barrier performance can be suppressed even when the packaging container is deformed into various shapes.

Yet another aspect of the present disclosure provides a packaged product including the above packaging container and contents sealed in the packaged container.

Since this packaged product includes the gas barrier laminate, it can have good durability and maintain good gas barrier performance even after high retort treatment. Therefore, deterioration of the quality of the contents due to oxygen ingress can be suppressed for a long period of time. Further, deterioration of the gas barrier performance can be suppressed even when the packaging container of the packaged product is deformed into various shapes.

### [Advantageous Effects of the Invention]

According to the present disclosure, a gas barrier laminate, a packaging container, and a packaged product are provided that have good durability and maintain good gas barrier performance even after high retort treatment.

### [Brief Description of the Drawings]

Fig. 1 is a cross-sectional view illustrating an embodiment of a gas barrier laminate according to an aspect of the present disclosure.
Fig. 2 is a cross-sectional view illustrating another embodiment of a gas barrier laminate according to an aspect of the present disclosure.
Fig. 3 is a cross-sectional view illustrating an embodiment of a packaged product according to another aspect of the present disclosure.

### [Description of the Embodiments]

Embodiments of the present disclosure are described in detail below. Note that the present disclosure is not limited to the following embodiments.

### <Gas barrier laminate>

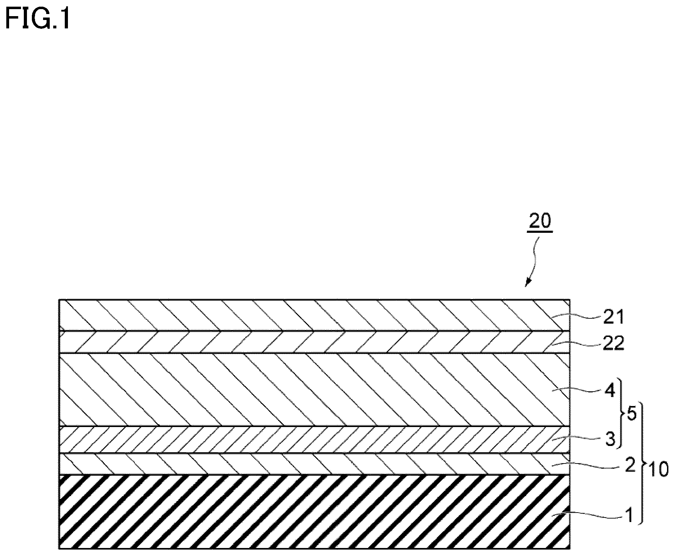

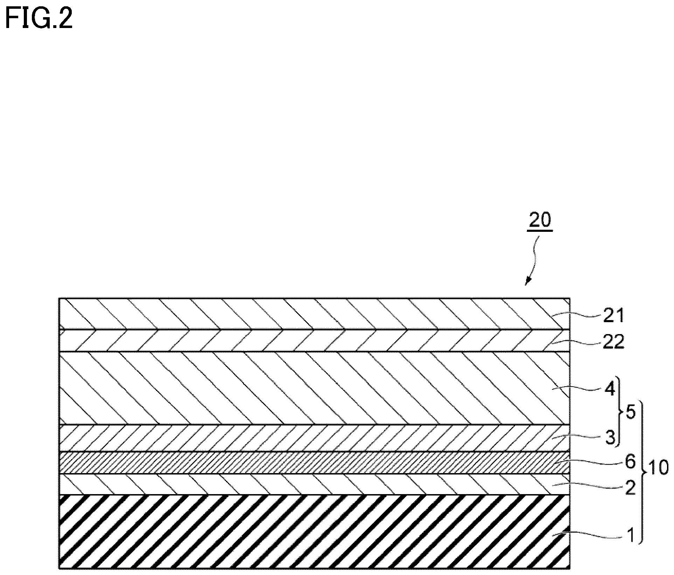

First, one embodiment of a gas barrier laminate according to an aspect of the present disclosure will be described with reference to Figs. 1 and 2. Fig. 1 is a cross-sectional view illustrating an embodiment of a gas barrier laminate according to an aspect of the present disclosure. Fig. 2 is a cross-sectional view illustrating another embodiment of a gas barrier laminate according to an aspect of the present disclosure.

The gas barrier laminate 20 shown in Fig. 1 includes a substrate layer 1, an intermediate layer 2, a barrier layer 5, and a sealant layer 21 in this order. The substrate layer 1, intermediate layer 2, and sealant layer 21 are made of a resin film. The barrier layer 5 includes an inorganic oxide layer 3 and a gas barrier coating layer 4 in this order from the intermediate layer 2 side. The hardness of a cross section of the gas barrier coating layer 4 as measured by nanoindentation is less than 0.75 GPa. The barrier layer 5 may further include an anchor coat layer 6 between the intermediate layer 2 and the inorganic oxide layer 3, as in the gas barrier laminate 20 shown in Fig. 2. The gas barrier laminate 20 may further include an adhesive layer 22 between the barrier layer 5 and the sealant layer 21.

This gas barrier laminate 20 can have good durability and maintain good gas barrier performance even after high retort treatment.

Next, the substrate layer 1, the intermediate layer 2, the anchor coat layer 6, the inorganic oxide layer 3, the gas barrier coating layer 4, the adhesive layer 22, and the sealant layer 21 will be described in detail.

### (Substrate layer)

The substrate layer 1 is a layer that serves as a support for the gas barrier coating layer 4, and is made of a resin film. Examples of the resin contained in the resin film include thermoplastic resins such as polyolefin resins and polyester resins.

Examples of polyolefin resins include polyethylene-based resins and polypropylene-based resins. Examples of polyethylene-based resins include low-density polyethylene resin (LDPE), medium-density polyethylene resin (MDPE), linear low-density polyethylene resin (LLDPE), ethylene-vinyl acetate copolymers (EVA), ethylene-α-olefin copolymers, and ethylene-(meth)acrylic acid copolymers. Examples of polypropylene-based resins include homopolypropylene and propylene copolymers. Examples of propylene copolymers include propylene-ethylene random copolymers, propylene-ethylene block copolymers, and propylene-α-olefin copolymers.

Examples of polyester resins include polyethylene terephthalate resin (PET), polybutylene terephthalate resin (PBT), polyethylene naphthalate resin (PEN), and polybutylene naphthalate resin (PBN). Examples of PET include virgin PET, which is PET newly synthesized from raw materials such as petroleum, and recycled PET. Examples of recycled PET include mechanically recycled PET and chemically recycled PET. Part of the terephthalic acids in the PET may be modified to phthalic acids.

The resin content in the resin film may be 99.5% by mass or more relative to the total mass of the substrate layer 1.

The substrate layer 1 may contain additives such as antistatic agents, ultraviolet absorbers, plasticizers, and lubricants as minor components. The substrate layer 1 may be subjected to a surface treatment such as plasma treatment to improve its adhesion to a layer laminated thereon.

The substrate layer 1 may be a stretched film or an unstretched film. However, it is preferably a stretched film for better gas barrier performance. The stretched film may be a uniaxially stretched film or a biaxially stretched film. A biaxially stretched film is preferred because it improves the heat resistance of the gas barrier laminate 20.

Although the thickness of the substrate layer 1 is not particularly limited, it may be, for example, 0.1 mm or less. The thickness of the substrate layer 1 is preferably 40 µm or less, more preferably 35 µm or less, and particularly preferably 30 µm or less. When the thickness of the substrate layer 1 is 0.1 mm or less, the flexibility of the gas barrier laminate 20 is further improved, and in turn the durability of the gas barrier laminate 20 can be further improved, compared to when the thickness of the substrate layer 1 exceeds 0.1 mm. However, to improve its strength, the thickness of the substrate layer 1 is preferably 10 µm or more, and more preferably 12 µm or more.

### (Intermediate layer)

The intermediate layer 2 is made of a resin film. The resin film forming the intermediate layer 2 may be the same as or different from the resin film included in the substrate layer 1.

Examples of the resin contained in the resin film include thermoplastic resins such as polyolefin resins and polyester resins.

Examples of polyolefin resins include polyethylene-based resins and polypropylene-based resins. Examples of polyethylene-based resins include low-density polyethylene resin (LDPE), medium-density polyethylene resin (MDPE), linear low-density polyethylene resin (LLDPE), ethylene-vinyl acetate copolymers (EVA), ethylene-α-olefin copolymers, and ethylene-(meth)acrylic acid copolymers. Examples of polypropylene-based resins include homopolypropylene and propylene copolymers. Examples of propylene copolymers include propylene-ethylene random copolymers, propylene-ethylene block copolymers, and propylene-α-olefin copolymers.

Examples of polyester resins include polyethylene terephthalate resin (PET), polybutylene terephthalate resin (PBT), polyethylene naphthalate resin (PEN), and polybutylene naphthalate resin (PBN). Examples of PET include virgin PET, which is PET newly synthesized from raw materials such as petroleum, and recycled PET. Examples of recycled PET include mechanically recycled PET and chemically recycled PET. Part of the terephthalic acids in the PET may be modified to phthalic acids.

The resin content in the resin film may be 99.5% by mass or more relative to the total mass of the intermediate layer 2.

The intermediate layer 2 may contain additives such as antistatic agents, ultraviolet absorbers, plasticizers, and lubricants as minor components. The intermediate layer 2 may be subjected to a surface treatment such as plasma treatment to improve its adhesion to a layer laminated thereon.

The intermediate layer 2 may be a stretched film or an unstretched film, but is preferably a stretched film for better gas barrier performance. The stretched film may be a uniaxially stretched film or a biaxially stretched film. A biaxially stretched film is preferred because it improves the heat resistance of the gas barrier laminate 20. In particular, when the substrate layer 1 is a stretched film, it is preferable that the intermediate layer 2 is also a stretched film. In that case, since the substrate layer 1 and the intermediate layer 2 are stretched films, the strength of the gas barrier laminate 20 is further improved. Therefore, reduced stress is applied to the gas barrier coating layer 4 when the gas barrier laminate 20 is subjected to high-temperature sterilization as part of a packaging container, or when it is deformed as part of a packaging container, so that cracks are less likely to be formed in the gas barrier coating layer 4 and the barrier performance of the gas barrier laminate 20 is further improved.

Although the thickness of the intermediate layer 2 is not particularly limited, it may be, for example, 0.1 mm or less. The thickness of the intermediate layer 2 is preferably 40 µm or less, more preferably 35 µm or less, and particularly preferably 30 µm or less. When the thickness of the intermediate layer 2 is 0.1 mm or less, the flexibility of the gas barrier laminate 20 is further improved, and in turn the durability of the gas barrier laminate 20 can be further improved, compared to when the thickness of the intermediate layer 2 exceeds 0.1 mm. However, to improve its strength, the thickness of the intermediate layer 2 is preferably 10 µm or more, and more preferably 12 µm or more.

### (Anchor coat layer)

The anchor coat layer 6 is a layer provided between the intermediate layer 2 and the inorganic oxide layer 3 to further improve the adhesion between the intermediate layer 2 and the inorganic oxide layer 3.

The material of the anchor coat layer 6 is not particularly limited as long as it is can improve the adhesion between the intermediate layer 2 and the inorganic oxide layer 3, and an example of such a material is a reaction product of an organosilane or organometallic compound, a polyol compound, and an isocyanate compound. Thus, the anchor coat layer 6 also serves as a urethane adhesive layer. The organosilane is, for example, trifunctional organosilane or a hydrolysate of trifunctional organosilane. The organometallic compound is, for example, a metal alkoxide or a hydrolysate of metal alkoxide. A metal element contained in the organometallic compound is, for example, Al, Ti, Zr, or the like. The hydrolysate of organosilane and the hydrolysate of metal alkoxide may each have at least one hydroxyl group. The polyol compound is preferably an acrylic polyol for better transparency. The isocyanate compound mainly functions as a crosslinking agent or a curing agent. The polyol and isocyanate compounds may be a monomer or a polymer.

The thickness of the anchor coat layer 6 is not particularly limited as long as the adhesion between the intermediate layer 2 and the inorganic oxide layer 3 can be improved, however, it is preferably greater than 50 nm. This further improves the gas barrier performance after high retort treatment compared to when the thickness of the anchor coat layer 6 is 50 nm or less. This also further improves the durability of the gas barrier laminate 20. The thickness of the anchor coat layer 6 is more preferably 70 nm or more, and even more preferably 80 nm or more. When the thickness of the anchor coat layer 6 is increased, a reduction in moisture barrier performance when an external force, such as stretching, is applied can be further suppressed. The thickness of the anchor coat layer 6 is preferably less than 300 nm. This further improves the durability of the gas barrier laminate 20, and also further improves the gas barrier performance after high retort treatment, compared to when the thickness of the anchor coat layer 6 is 300 nm or more. The thickness of the anchor coat layer 6 is more preferably 200 nm or less. The thickness of the anchor coat layer 6 may be 180 nm or less or 160 nm or less.

### (Inorganic oxide layer)

The inorganic oxide layer 3 is a layer containing an inorganic oxide. The gas barrier laminate 20 can have a further improved gas barrier performance by having the inorganic oxide layer 3.

An inorganic substance forming the inorganic oxide may be, for example, at least one atom selected from the group consisting of Si, Al, Mg, Sn, Ti, and In. For better moisture barrier performance, the inorganic oxide is preferably SiOₓ or AlOₓ (silicon oxide or aluminum oxide). In particular, SiOₓ is preferred as the inorganic oxide. In that case, the gas barrier laminate 20 can exhibit a better moisture barrier performance.

The inorganic oxide layer 3 may include a single layer or multiple layers.

The thickness of the inorganic oxide layer 3 is not particularly limited, but is preferably greater than 5 nm. In that case, compared to when the thickness of the inorganic oxide layer 3 is 5 nm or less, it is possible to further improve the gas barrier performance of the gas barrier laminate 20 even after high retort treatment. This also further improves the durability of the gas barrier laminate 20. The thickness of the inorganic oxide layer 3 is more preferably 8 nm or more, and particularly preferably 10 nm or more.

In addition, the thickness of the inorganic oxide layer 3 is preferably less than 80 nm. In that case, compared to when the thickness of the inorganic oxide layer 3 is 80 nm or more, it is possible to further improve the gas barrier performance of the gas barrier laminate 20 after high retort treatment. This also further improves the durability of the gas barrier laminate 20. The thickness of the inorganic oxide layer 3 is more preferably 70 nm or less, and particularly preferably 60 nm or less. To improve the durability of the gas barrier laminate 20, the thickness of the inorganic oxide layer 3 may be 50 nm or less, 40 nm or less, 30 nm or less, 28 nm or less, or 25 nm or less.

### (Gas barrier coating layer)

The gas barrier coating layer 4 is formed from a cured product of a composition for forming the gas barrier coating layer.

The hardness of a cross section of the gas barrier coating layer 4 as measured by nanoindentation is less than 0.75 GPa. In that case, compared to when the hardness of the gas barrier coating layer 4 in a cross section is 0.75 GPa or more, the gas barrier laminate 20 can have better durability and maintain good gas barrier performance even after high retort treatment. The hardness of the gas barrier coating layer 4 in a cross section is preferably less than 0.71 GPa, more preferably 0.60 GPa or less, even more preferably less than 0.5 GPa, and particularly preferably less than 0.35 GPa. When the hardness of the gas barrier coating layer 4 in a cross section is less than 0.71 GPa, the gas barrier laminate 20 can have better durability and maintain good gas barrier performance even after high retort treatment.

The hardness of the gas barrier coating layer 4 in a cross section is preferably 0.1 GPa or more. When the hardness is 0.1 GPa or more, the thermal shock resistance of the gas barrier coating layer 4 is improved, and therefore the gas barrier coating layer 4 is less likely to deteriorate due to high retort treatment or the like.

The hardness of the gas barrier coating layer 4 is preferably 0.12 GPa or more, and more preferably 0.13 GPa or more. The hardness of the gas barrier coating layer 4 in a cross section may be 0.20 GPa or more, 0.25 GPa or more, or 0.30 GPa or more.

The hardness of the gas barrier coating layer 4 in a cross section is measured by nanoindentation. Nanoindentation is a measurement method in which a quasi-static indentation test is performed on a target object to determine the mechanical properties of the sample.

The measurement sample (cross-sectional sample) is prepared as follows. That is, after both sides of the gas barrier laminate 20 are subjected to corona treatment, the gas barrier laminate 20 is embedded in a visible light curable resin (ARONIX LCR D-800, manufactured by Toagosei Co., Ltd.). Then, the gas barrier laminate 20 is cut perpendicularly to the lamination direction thereof using an ultramicrotome (EM UC7, manufactured by Leica) and a diamond knife (LH, manufactured by Microstar). The resulting cross section is subjected to a finishing process under the conditions of a feed of 100 nm and a cutting speed of 1 mm/s to finally obtain a measurement sample.

The measurement is carried out with Hysitron TI-Premier (product name) manufactured by Bruker Japan as the measuring device, using a diamond Berkovich indenter manufactured by Bruker Japan is used as the indenter. The measurement conditions are as follows.

### (Measurement conditions)

Temperature: Normal temperature (25°C)
Mode: Load control mode
Indentation and unloading: Indentation is performed up to a load of 15 µN at an indentation rate of 1.5 µN/sec. After maintaining the maximum load for 5 seconds, the indenter is unloaded at a rate of 1.5 µN/sec.
Measurement points: A shape image of the cross section of the gas barrier coating layer is obtained using the shape measurement function of the measuring device that scans the sample surface with an indenter. Using the shape image, 20 points are specified on the cross section of the gas barrier coating layer at intervals of 1 µm or more.

When calculating the hardness, the relationship between the contact depth and the projected contact area between the indenter and the sample is calibrated in advance using fused quartz as a standard sample. After that, the unloading curve in the region of 60 to 95% of the maximum load upon unloading is analyzed by the Oliver-Pharr method to calculate the hardness.

The atomic ratio of silicon atoms to carbon atoms (Si/C) on the surface of the gas barrier coating layer 4 as measured by X-ray photoelectron spectroscopy (XPS) may be less than 0.80 or less than 0.75. When Si/C is less than 0.80, The durability of the gas barrier laminate 20 can be further improved.

The Si/C ratio on the surface of the gas barrier coating layer 4 is preferably less than 0.50. This makes it possible to effectively improve the durability of the gas barrier laminate 20.

To improve the adhesion between the sealant layer 21 and the gas barrier coating layer 4, Si/C on the surface of the gas barrier coating layer 4 is preferably greater than 0.

The Si/C ratio on the surface of the gas barrier coating layer 4 may be 0.15 or more, 0.20 or more, 0.30 or more, or 0.40 or more.

To determine Si/C, narrow spectrum analysis was performed under the following measurement conditions using the following measuring equipment to obtain a narrow spectrum of O1s, N1s, C1s, and Si2p orbitals on the surface of the gas barrier coating layer 4. The respective peak areas for each of elements O, N, C, and Si are used with the relative sensitivity coefficients of 1.00 eV for C1s and 0.9 eV for Si2p to determine elemental quantitative values (atomic %), and Si/C is determined using the obtained elemental quantitative values.

### <Measuring equipment>

JPS-9030, a photoelectron spectrometer manufactured by JEOL Ltd.

### <Measurement conditions>

### (Conditions for collecting spectra)

Incident X-ray: Mg Kα (hv = 1253.6 eV)
X-ray output: 100 W (10 kV, 10 mA)
Measurement area: A circular area with a diameter of 6 mm
Photoelectron collection angle: 90°

### (Measurement conditions)

Dwell time: 100 ms
Measurement step: 0.2 eV
Pass energy: 10 eV
Number of integrations: 5

The composition for forming the gas barrier coating layer contains, for example, a first silicon compound and a water-soluble macromolecule. The first silicon compound includes at least one of a silicon alkoxide represented by the following general formula (1) and a hydrolysate thereof.

Si(OR¹)₄ ...(1)

In the general formula (1), R¹ represents an alkyl group. Examples of the alkyl group include a methyl group and an ethyl group. Among these groups, an ethyl group is preferred. In that case, the silicon alkoxide will be tetraethoxysilane, which is relatively stable in an aqueous solvent after hydrolysis.

The content of the first silicon compound in the solids is not particularly limited; however, when converted into an SiO₂ equivalent, it is preferably 3% by mass or more, more preferably 5% by mass or more, and particularly preferably 8% by mass or more. When the content of the first silicon compound in the solids is 8% by mass or more, the adhesion between the gas barrier coating layer 4 and the sealant layer 21 and the inorganic oxide layer 3 after retort treatment is further improved compared to when the content of the first silicon compound in the solids is less than 8% by mass.

The content of the first silicon compound in the solids is preferably less than 65%, more preferably 60% by mass or less, even more preferably 54% by mass or less, and particularly preferably 39% by mass or less. When the content of the first silicon compound in the solids is less than 65% by mass, the durability of the gas barrier laminate 20 can be further improved compared to when the content of the first silicon compound in the solids is 65% by mass or more. It also further improves the gas barrier performance of the gas barrier laminate 20 even after high retort treatment.

Examples of the water-soluble macromolecule include polyvinyl alcohol resin, modified polyvinyl alcohol resin, and polyacrylic acid. These can be used singly or in combination of two or more. Among these, the water-soluble macromolecule is preferably a polyvinyl alcohol resin or a modified polyvinyl alcohol resin. In that case, the composition allows the gas barrier laminate 20 to exhibit a better gas barrier performance after being cured. This composition can also impart better flexibility to the gas barrier laminate 20 even after curing, and therefore can further improve the gas barrier performance even after flex test.

When the water-soluble macromolecule is made of a polyvinyl alcohol resin or a modified polyvinyl alcohol resin, a saponification index of the water-soluble macromolecule is not particularly limited. However, to improve the gas barrier performance of the gas barrier laminate 20, it is preferably 95% or more, and may be 100%.

The degree of polymerization of the water-soluble macromolecule is not particularly limited, but to improve the gas barrier performance of the gas barrier laminate 20, it is preferably 300 or more. The degree of polymerization of the water-soluble macromolecule is preferably 450 to 2,400.

The content of the water-soluble macromolecule in the solids is preferably more than 25% by mass, more preferably more than 27% by mass, even more preferably more than 41% by mass, and particularly preferably more than 56% by mass. When the content of the water-soluble macromolecule in the solids is more than 25% by mass, the durability of the gas barrier laminate 20 can be further improved compared to when the content of the water-soluble macromolecule in the solids is 25% by mass or less.

The content of the water-soluble macromolecule in the solids is preferably 92% by mass or less, more preferably 90% by mass or less, and particularly preferably 88% by mass or less. When the content of the water-soluble macromolecule in the solids is 92% by mass or less, the interlayer adhesion in the gas barrier laminate 20 after retort treatment can be further improved compared to when the content of the water-soluble macromolecule in the solids is more than 92% by mass.

The composition for forming the gas barrier coating layer may contain a second silicon compound as a curing agent.

Although the second silicon compound is not particularly limited, it preferably includes at least one of a silane coupling agent represented by the following general formula (2) and a hydrolysate thereof.

(R²Si(OR³)₃)ₙ ......(2)

In the above general formula (2), R² represents a monovalent organic group, and R³ represents an alkyl group or -C₂H₄OCH₃.

In that case, the adhesion between the gas barrier coating layer 4 and the inorganic oxide layer 3 can be improved, which suppresses delamination in the gas barrier laminate 20.

R² and R³ may be the same or different. The R³ groups may be the same or different.

Examples of the monovalent organic group represented by R² include monovalent organic functional groups containing a vinyl group, an epoxy group, a mercapto group, an amino group, or an isocyanate group. Among these, the monovalent organic functional group is preferably an isocyanate group. In that case, the composition can have better hot water resistance after curing, and the gas barrier laminate 20 can maintain a greater laminate strength even after retort treatment.

Examples of the alkyl group represented by R³ include a methyl group and an ethyl group. Among these groups, a methyl group is preferred. In that case, the rate of hydrolysis can be increased.

n represents an integer greater than or equal to 1. When n is 1, the silane coupling agent represents a monomer, whereas when n is greater than or equal to 2 or more, the silane coupling agent represents a multimer. n is preferably 3. In that case, the hot water resistance of the gas barrier coating layer 4 can be further improved, and the gas barrier laminate 20 can maintain a greater laminate strength even after retort treatment.

Examples of the silane coupling agent include silane coupling agents having a vinyl group, such as vinyltrimethoxysilane and vinyltriethoxysilane; silane coupling agents having an epoxy group, such as 3-glycidoxypropyltrimethoxysilane, 3-glycidoxypropyltriethoxysilane, 3-glycidoxypropylmethyldimethoxysilane, and 3-glycidoxypropylethyldiethoxysilane; silane coupling agents having a mercapto group, such as 3-mercaptopropyltrimethoxysilane and 3-mercaptopropylmethyldimethoxysilane; silane coupling agents having an amino group, such as 3-aminopropyltrimethoxysilane and 3-aminopropyltriethoxysilane; and silane coupling agents having an isocyanate group, such as 3-isocyanatepropyltriethoxysilane and 1,3,5-tris(3-methoxysilylpropyl)isocyanurate. These silane coupling agents may be used singly or in combination of two or more.

The content of the second silicon compound in the solids is not particularly limited.; however, it is preferably 1% by mass or more, more preferably 2% by mass or more, and particularly preferably 5% by mass or more. In that case, compared to when the content of the second silicon compound in the solids is less than 1% by mass, by curing the mixture, it is possible to impart a greater laminate strength to the gas barrier laminate 20 even after retort treatment.

The content of the second silicon compound in the solids is preferably 20% by mass or less, more preferably 18% by mass or less, particularly preferably 15% by mass or less, and even more preferably less than 10% by mass. In that case, the second silicon compound is less likely to bleed out and contaminate the surface, compared to when the content of the second silicon compound in the solids exceeds 20% by mass.

Note that, when the silane coupling agent is represented by the above general formula (2), the content of the second silicon compound in the solids is calculated by converting the mass of the silane coupling agent and its hydrolysate into the mass of R²Si(OH)₃.

The solids may further contain a known additive such as a dispersant, a stabilizer, a viscosity modifier, or a colorant as necessary to an extent that does not impair the gas barrier performance of the gas barrier coating layer 4.

The total content of the first silicon compound, the water-soluble macromolecule, and the second silicon compound in the solids is not particularly limited. However, it is typically 95% by mass or more, preferably 97% by mass or more, and may be 100% by mass.

A liquid in which the solids are dissolved or dispersed is typically an aqueous medium. The aqueous medium may be water, a hydrophilic organic solvent, or a mixture thereof. Examples of the hydrophilic organic solvent include alcohols such as methanol, ethanol, and isopropanol; ketones such as acetone and methyl ethyl ketone; ethers such as tetrahydrofuran; cellosolves; carbitols; and nitriles such as acetonitrile. These can be used singly or in combination of two or more.

The aqueous solvent is preferably an aqueous medium consisting of water alone or an aqueous medium containing water as a main component. When the aqueous medium contains water as a main component, the water content in the aqueous medium is preferably 70% by mass or more, and more preferably 80% by mass or more.

The thickness of the gas barrier coating layer 4 is not particularly limited, but is preferably greater than 50 nm.

In that case, compared to when the thickness of the gas barrier coating layer 4 is 50 nm or less, the gas barrier laminate 20 can have better durability and maintain better gas barrier performance even after high retort treatment.

To improve the gas barrier performance, the thickness of the gas barrier coating layer 4 is more preferably 100 nm or more, even more preferably 200 nm or more, and particularly preferably 250 nm or more.

On the other hand, the thickness of the gas barrier coating layer 4 is preferably less than 700 nm. Compared to when the thickness of the gas barrier coating layer 4 is 700 nm or more, the gas barrier laminate 20 can have better durability and maintain better gas barrier performance even after high retort treatment.

To further improve the flexibility of the gas barrier laminate 20, the thickness of the gas barrier coating layer 4 is more preferably 500 nm or less, and particularly preferably 400 nm or less.

### (Adhesive layer)

The adhesive used to form the adhesive layer 22 may be, for example, an adhesive containing a resin such as a polyester-isocyanate resin, a urethane resin, or a polyether resin.

The adhesive may or may not further contain a solvent, but preferably does not contain a solvent. When the adhesive does not contain a solvent, it is possible to improve the heat conduction from the heat-sealing bar during heat sealing of the gas barrier laminate 20. This reduces the sealing time and temperature, and therefore suppresses the occurrence of wrinkles and the like associated with heat sealing.

In addition, the amount of residual solvent in the gas barrier laminate 20 can be reduced because the adhesive does not contain a solvent. To be more specific, when the adhesive contains a solvent, the solvent in the adhesive may not be sufficiently evaporated and may remain in the gas barrier laminate 20, and the remaining solvent may emit an odor. In contrast, when the adhesive does not contain a solvent, the amount of residual solvent in the adhesive layer 2 can be further reduced. This reduces the amount of residual solvent in the gas barrier laminate 20 and suppresses odor.

Further, since the adhesive does not contain a solvent, the working environment can be improved when producing the gas barrier laminate 20.

Since the adhesive does not contain a solvent, the adhesive layer 2 can be made thin. This makes it possible to increase the proportion of a monomaterial in the gas barrier laminate 20.

Note that, when the gas barrier laminate 20 is used for retort applications, a two-component urethane adhesive that is resistant to retort treatment can be suitably used.

The adhesive layer 22 may be formed and laminated by a known method such as dry lamination or non-solvent lamination.

### (Sealant layer)

The sealant layer 21 is made of a resin film.

Examples of the resin contained in the resin film include thermoplastic resins such as polyolefin resins.

Examples of polyolefin resins include polyethylene-based resins and polypropylene-based resins. Examples of polyethylene-based resins include low-density polyethylene resin (LDPE), medium-density polyethylene resin (MDPE), linear low-density polyethylene resin (LLDPE), ethylene-vinyl acetate copolymers (EVA), ethylene-α-olefin copolymers, and ethylene-(meth)acrylic acid copolymers. Examples of polypropylene-based resins include homopolypropylene and propylene copolymers. Examples of propylene copolymers include propylene-ethylene random copolymers, propylene-ethylene block copolymers, and propylene-α-olefin copolymers.

The resin content in the resin film may be 99.5% by mass or more relative to the total mass of the sealant layer 21.

The sealant layer 21 may contain additives such as antistatic agents, ultraviolet absorbers, plasticizers, and lubricants as minor components. The intermediate layer 2 may be subjected to a surface treatment such as plasma treatment to improve its adhesion to a layer laminated thereon.

The material of the sealant layer 21 can be selected as appropriate from the aforementioned thermoplastic resins depending on the intended use and temperature conditions such as boiling or retort treatment.

When the resin films forming the substrate layer 1 and the intermediate layer 2 contain a polypropylene-based resin, the resin film forming the sealant layer 21 also preferably contains a polypropylene-based resin. In that case, since the resin films forming the substrate layer 1, the intermediate layer 2, and the sealant layer 21 contain a polypropylene-based resin, the recyclability of the gas barrier laminate 20 is further improved.

The resin film forming the sealant layer 21 may be a stretched film or an unstretched film, but preferably it is an unstretched film (for example, CPP) to lower the melting point and facilitate heat sealing.

The thickness of the sealant layer 21 is not particularly limited and is determined as appropriate depending on the mass of the contents, the shape of the packaging bag, and the like. However, for better flexibility and adhesiveness of the gas barrier laminate 20, it is preferably 30 to 150 µm.

<Method of producing gas barrier laminate>

Next, an example of a method of producing the above-described gas barrier laminate 20 will be described.

First, the intermediate layer 2 is prepared.

Next, the anchor coat layer 6 is formed on one surface of the intermediate layer 2 to obtain a first laminate.

Specifically, the anchor coat layer 6 is formed by applying a composition for forming the anchor coat layer 6 onto one surface of the intermediate layer 2 and drying it by heating. For example, the heating temperature is 50 to 120°C and the heating time is about 10 seconds to 10 minutes.

Next, the inorganic oxide layer 3 is formed on the anchor coat layer 6 to obtain a second laminate.

The inorganic oxide layer 3 can be formed by a vacuum film-formation method. Examples of vacuum film-formation methods include physical vapor deposition and chemical vapor deposition. Examples of physical vapor deposition include vacuum vapor deposition, sputtering, and ion plating. In particular, the physical vapor deposition is preferably vacuum vapor deposition. Examples of vacuum vapor deposition include resistance heating vacuum deposition, electron beam (EB) heating vacuum deposition, and induction heating vacuum deposition. Examples of chemical vapor deposition include heat CVD, plasma CVD, and optical CVD.

Next, the gas barrier coating layer 4 is formed on the inorganic oxide layer 3 of the second laminate.

The gas barrier coating layer 4 can be formed, for example, by applying the composition for forming the gas barrier coating layer onto the inorganic oxide layer 3 and curing the resulting coating film.

Curing the coating film specifically means curing the solids contained in the coating film. Curing the solids means causing the first silicon compound and the water-soluble macromolecule, or the first silicon compound, the water-soluble macromolecule, and the second silicon compound in the solids to react and become integrated with each other.

The composition for forming the gas barrier coating layer can be applied by a known method. Specific examples of the coating method include wet film-formation methods such as gravure coating, dip coating, reverse coating, wire bar coating, and die coating.

The gas barrier coating layer 4 can be obtained, for example, by performing a first drying step in which the coating film is heated and dried using infrared light, and then performing a second drying step in which the coating film is heated, cured, and dried in an oven. The coating film is dried by infrared light before being heated in an oven mainly to prevent the surface from becoming rough and also to apply a uniform amount of heat across the coating film in advance so that the entire coating film dries uniformly.

Drying in an oven is effective for drying and curing a coating film, but since drying proceeds from the surface of the coating film, there is likely to be a solvent concentration gradient in the thickness direction of the coating film. This causes a phenomenon known as skinning, in which a highly concentrated layer is formed on the surface of the coating film, facilitating the solvent inside to remain without evaporating. In particular, when a water-soluble macromolecule such as PVA is used as the solute, skinning is likely to occur since it retains water well and easily forms a film. When the coating surface shrinks due to skinning, heat spots are formed on the coating surface and inside the coating film. Such heat spots increase the hardness of the surface of the gas barrier coating layer 4. Therefore, when the hardness of the gas barrier coating layer 4 in a cross section is measured, the hardness tends to be large.

In contrast, drying by infrared light can dry the coating film uniformly in the thickness direction by using infrared light. Therefore, by drying the coating film using infrared light before oven drying, skinning is less likely to occur, heat spots are less likely to be formed, and the hardness of the gas barrier coating layer 4 in a cross section is more likely to be reduced.

Drying by infrared light can be carried out using an infrared dryer such as an infrared heater (far-infrared heater). The conditions for the infrared heater can be, for example, a central wavelength of 3 to 10 µm (far infrared region), a ceramic temperature of 180 to 250°C, and an emissivity of 0.90 to 0.98. The infrared light may be any of far infrared, mid infrared, and near infrared; however, far infrared is preferred to apply heat uniformly to the coating film.

To apply a sufficient amount of heat to the entire coating film, the temperature for drying by infrared light can be 40°C or higher, preferably 50°C or higher. To suppress shrinkage of the gas barrier coating layer 4, the drying temperature can be 70°C or less, preferably 60°C or less. The drying temperature is the temperature of the coating film measured using a temperature indicator (Heat Label, manufactured by Micron Corporation).

To achieve the same objectives as described above, the drying time can be 3 seconds or more, preferably 5 seconds or more, and can be 15 seconds or less, preferably 10 seconds or less.

The oven heating temperature and heating time are set so as to suppress deformation (for example, thermal shrinkage) of the substrate layer 1 and to simultaneously cure the solids in the composition for forming the gas barrier coating layer and remove the aqueous medium or another liquid. To cure the solids in the composition for forming the gas barrier coating layer and remove the aqueous medium or another liquid, the heating temperature is 50°C or higher, preferably 60°C or higher, and more preferably 80°C or higher. The heating temperature is 120°C or less, preferably 110°C or less to suppress deformation (for example, thermal shrinkage) of the substrate layer 1.

To achieve the same objectives as described above, the heating time is preferably 3 seconds or more, more preferably 5 seconds or more, and even more preferably 10 seconds or more, and is preferably 10 minutes or less, more preferably 5 minutes or less, and even more preferably 3 minutes or less.

In this way, the barrier layer 5 consisting of the anchor coat layer 6, the inorganic oxide layer 3, and the gas barrier coating layer 4 is formed on the intermediate layer 2 to obtain a third laminate.

Next, the substrate layer 1 is prepared. This substrate layer 1 is bonded to the surface of the intermediate layer 2 of the third laminate on which the barrier layer 5 is not formed by, for example, dry lamination. A fourth laminate is thus obtained.

Next, the sealant layer 21 is attached to a surface of the gas barrier coating layer 4 of the fourth laminate using, for example, a composition for forming an adhesive layer.

The gas barrier laminate 20 is thus obtained.

Note that the substrate layer 1 may be bonded to the intermediate layer 2 in advance before the anchor coat layer 6 is formed on the intermediate layer 2.

### <Packaged product>

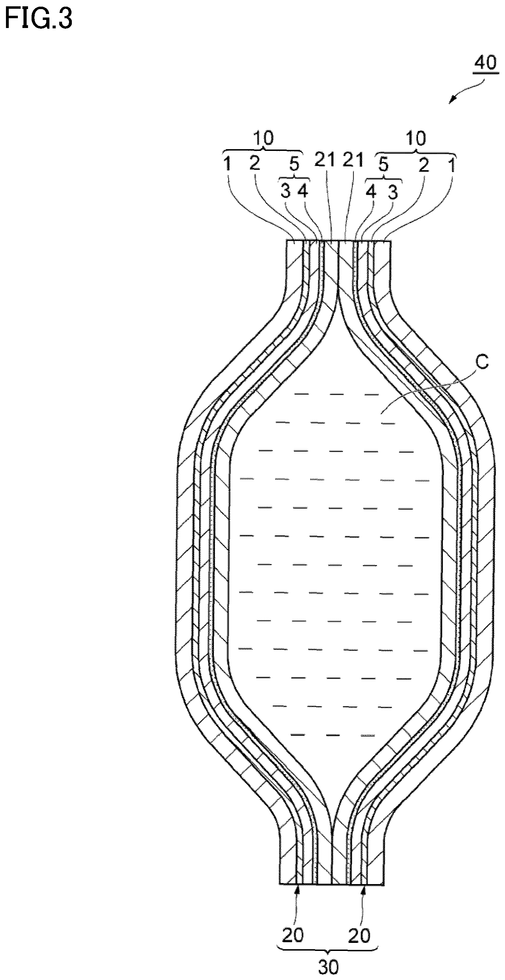

An embodiment of a packaged product of the present disclosure will be described with reference to Fig. 3. Fig. 3 is a cross-sectional view illustrating an embodiment of the packaged product of the present disclosure. In Fig. 3, components that are the same as those in Fig. 1 are denoted by the same reference numbers, and description thereof is not repeated.

As shown in Fig. 3, a packaged product 40 includes a packaging container 30 and contents C sealed in the packaging container 30. The packaging container 30 shown in Fig. 3 is obtained using a pair of gas barrier laminates 20. A peripheral part of the gas barrier laminates 20 is heat-sealed with their respective sealant layers 21 facing each other. Note that, in Fig. 3, the adhesive layer 22 of the gas barrier laminate 20 is omitted.

This packaged product 40 includes the packaging container 30, has good durability, and can maintain good gas barrier performance even after high retort treatment. Therefore, deterioration of the quality of the contents C due to oxygen ingress can be suppressed for a long period of time. Further, deterioration of the gas barrier performance can be suppressed even when the packaging container 30 of the packaged product 40 is deformed into various shapes.

Note that the packaging container 30 can also be obtained by folding a single gas barrier laminate 20 and heat-sealing a peripheral part of the folds of the gas barrier laminate 20 with their respective sealant layers 21 facing each other.

Examples of the packaging container 30 include a packaging bag, a laminated tube container, and a paper liquid container.

The contents C are not particularly limited, and examples of the contents C include food, liquid, medicine, and electronic parts.

### <Outline of the present disclosure>

The following sets forth an outline of the present disclosure.
[1] A gas barrier laminate including a substrate layer, an intermediate layer, a gas barrier coating layer, and a sealant layer in this order, wherein the substrate layer, the intermediate layer, and the sealant layer are each made of a resin film, and the hardness of the gas barrier coating layer in a cross section as measured by nanoindentation is less than 0.75 GPa.
[2] The gas barrier laminate according to [1], wherein the hardness of the gas barrier coating layer in the cross section as measured by nanoindentation is 0.1 GPa or more.
[3] The gas barrier laminate according to [1] or [2], wherein the resin film includes a polypropylene-based resin, and the resin films comprising the substrate layer and the intermediate layer among the substrate layer, the intermediate layer, and the sealant layer is are each comprised a stretched film.
[4] The gas barrier laminate according to any one of [1] to [3], wherein an atomic ratio of silicon atoms to carbon atoms (Si/C) on a surface of the gas barrier coating layer as measured by X-ray photoelectron spectroscopy (XPS) is less than 0.80.
[5] The gas barrier laminate according to [4], wherein an atomic ratio of silicon atoms to carbon atoms (Si/C) on a surface of the gas barrier coating layer as measured by X-ray photoelectron spectroscopy (XPS) is less than 0.50.
[6] The gas barrier laminate according to any one of [1] to [5], wherein the gas barrier coating layer is formed using a composition for forming the gas barrier coating layer that contains a first silicon compound and a water-soluble macromolecule, and the first silicon compound includes at least one of a silane alkoxide represented by a following general formula (1) and a hydrolysate thereof.

   Si(OR¹)₄ ...(1)

   (In the general formula (1), R¹ represents an alkyl group.)
[7] The gas barrier laminate according to [6], wherein the composition for forming the gas barrier coating layer further contains a second silicon compound, and the second silicon compound includes at least one of a silane coupling agent represented by a following general formula (2) and a hydrolysate thereof.

   (R²Si(OR³)₃)ₙ ......(2)

   (In the above general formula (2), R² represents a monovalent organic group, R³ represents an alkyl group or -C₂H₄OCH₃, and n represents an integer greater than or equal to 1.)
[8] The gas barrier laminate according to any one of [1] to [7], wherein the gas barrier coating layer has a thickness of more than 50 nm and less than 700 nm.
[9] The gas barrier laminate according to any one of [1] to [8], wherein the barrier layer further includes an inorganic oxide layer between the intermediate layer and the gas barrier coating layer.
[10] The gas barrier laminate according to [9], wherein the inorganic oxide layer has a thickness of more than 5 nm and less than 80 nm.
[11] The gas barrier laminate according to [9] or [10], further including an anchor coat layer between the intermediate layer and the inorganic oxide layer.
[12] The gas barrier laminate according to [11], wherein the anchor coat layer has a thickness of more than 50 nm and less than 300 nm.
[13] A packaging container including the gas barrier laminate according to any one of [1] to [12].
[14] A packaged product including the packaging container according to [13] and contents sealed in the packaged container.

### Examples

In the following, the present disclosure will be specifically described by way of examples. However, the present disclosure should not be limited to the following examples.

### <Preparation of coat solution>

Coat solutions 1 to 5 were prepared as follows to be used as compositions for forming a gas barrier coating layer in the examples and comparative examples.

### (Coat solution 1)

The following solutions A to C were mixed to obtain the coat solution 1. The coat solution 1 was prepared so that, when the solid content is assumed to be 100, the mass ratio of tetraethoxysilane (also called "TEOS", expressed as an SiO₂ equivalent), polyvinyl alcohol (also called "PVA"), and isocyanurate silane (expressed as an R²Si(OH)₃ equivalent) would be 68/27/5.

Solution A: A solution (5% by mass (SiO₂ equivalent) hydrolyzed solution of TEOS) obtained by mixing 17.9 g of TEOS (product name: KBE04, solid content: 100%, manufactured by Shin-Etsu Chemical Co., Ltd.) as the first silicon compound, 10 g of methanol (manufactured by KANTO CHEMICAL CO., INC.), and 72. 1 g of 0.1N hydrochloric acid (manufactured by KANTO CHEMICAL CO., INC.) and stirring the resulting mixture for 30 minutes to hydrolyze the TEOS.

Solution B: A 5% by mass aqueous solution of PVA (product name: Kuraray Poval 60-98, manufactured by Kuraray Co., Ltd.).

Solution C: A solution obtained by diluting 1,3,5-tris(3-methoxysilylpropyl)isocyanurate (product name: X-12-965P, manufactured by Shin-Etsu Chemical Co., Ltd.) as a silane coupling agent (SC) with a combined solution of water/IPA = 1/1 (mass ratio) so that the solid content became 5% (mass ratio, expressed as an R²Si(OH)₃ equivalent).

### (Coat solution 2)

The above solutions A to C were mixed to obtain the coat solution 2. The coat solution 2 was prepared so that the mass ratio of TEOS (SiO₂ equivalent), PVA, and isocyanurate silane (R²Si(OH)₃ equivalent) would be 54/41/5 when the solid content is assumed to be 100.

### (Coat solution 3)

The above solutions A to C were mixed to obtain the coat solution 3. The coat solution 3 was prepared so that the mass ratio of TEOS (SiO₂ equivalent), PVA, and isocyanurate silane (R²Si(OH)₃ equivalent) would be 39/56/5 when the solid content is assumed to be 100.

### (Coat solution 4)

The above solutions A to C were mixed to obtain the coat solution 4. The coat solution 4 was prepared so that the mass ratio of TEOS (SiO₂ equivalent), PVA, and isocyanurate silane (R²Si(OH)₃ equivalent) would be 8/87/5 when the solid content is assumed to be 100.

### (Coat solution 5)

The above solutions A to C were mixed to obtain the coat solution 5. The coat solution 5 was prepared so that the mass ratio of TEOS (SiO₂ equivalent), PVA, and isocyanurate silane (R²Si(OH)₃ equivalent) would be 65/25/10 when the solid content is assumed to be 100.

### <Preparation of composition for forming anchor coat layer>

A composition for forming the anchor coat layer was prepared as follows.

Acrylic polyol was mixed with tolylene diisocyanate so that the number of NCO groups in the tolylene diisocyanate matched the number of OH groups in the acrylic polyol, and the mixture was diluted with ethyl acetate so that the solid content (the total mass of acrylic polyol and tolylene diisocyanate) became 5 % by mass. 5 parts by mass of β-(3,4-epoxycyclohexyl)trimethoxysilane was further added to a total of 100 parts by mass of the acrylic polyol and tolylene diisocyanate in the mixed solution after dilution, and these compounds were mixed to prepare the composition for forming the anchor coat layer (anchor coat agent).

### <Production of gas barrier laminate>

### (Example 1)

First, a polypropylene resin film (product name "U-1", biaxially oriented film: OPP, manufactured by Mitsui Chemicals Tohcello, Inc.) with a thickness of 20 µm was prepared as the intermediate layer.

Next, the composition for forming the anchor coat layer prepared as described above was applied onto one surface of the polypropylene resin film by gravure coating to form a coating film. The coating film was dried by heating at 120°C for 10 seconds, thereby forming an anchor coat layer (AC layer) having a thickness of 150 nm.

Then, an SiOₓ film (inorganic oxide layer) with a thickness of 20 nm was formed on the obtained anchor coat layer of the first laminate 1. The SiOₓ film was formed using a vacuum vapor deposition device of the electron beam heating type so as to evaporate silicon dioxide by electron beam heating.

Next, the coat solution 1 was applied onto the SiOₓ film to form a coating film. Using a far-infrared heater (manufactured by Yamato Scientific Co., Ltd. product name DIR631), the formed coating film was dried by far-infrared (IR) heating (IR drying) under the condition of a set temperature of 60°C and a duration of 10 seconds. The conditions for the far-infrared heater were a central wavelength of 6 µm, a ceramic temperature of 203°C, and an emissivity of 0.93.

After the IR drying, the coating film was further heated and dried in an oven at 100°C for 30 seconds to form a gas barrier coating layer having a thickness of 300 nm. In this way, a barrier layer consisting of the anchor coat layer, the inorganic oxide layer, and the gas barrier coating layer was formed on the intermediate layer to obtain a first laminate. The heating was carried out so as to remove the liquids from the coat solution 1 while curing the TEOS, PVA, and isocyanurate silane constituting the solids of the coat solution 1 to form a cured product. The Si/C ratio of the surface of the gas barrier coating layer of the first laminate thus obtained was determined by a method described below. The results are shown in Table 1.

Next, a polypropylene resin film (product name "U-1", biaxially oriented film: OPP, manufactured by Mitsui Chemicals Tohcello, Inc.) with a thickness of 20 µm was prepared as the substrate layer.

Using a two-component urethane adhesive (product name "A525/A52"), this polypropylene resin film was bonded by dry lamination to the surface of the intermediate layer of the first laminate that was not formed with the barrier layer, thereby obtaining a second laminate.

Then, an unstretched polypropylene film (product name "TORAYFAN ZK207", manufactured by Toray Industries, Inc.) with a thickness of 60 µm was bonded as a sealant layer onto the gas barrier coating layer of this second laminate by dry lamination using a two-component urethane adhesive (product name "A525/A52").

A gas barrier laminate was thus obtained in which the substrate layer, the intermediate layer, the anchor coat layer, the inorganic oxide layer, the gas barrier coating layer, the adhesive layer, and the sealant layer were laminated in this order.

The hardness of the gas barrier coating layer in the gas barrier laminate thus obtained was determined by a method described below. The results are shown in Table 1.

### (Examples 2 to 11)

Gas barrier laminates were obtained in the same manner as in Example 1, except that the thickness of the anchor coat layer, the thickness of the inorganic oxide layer, the type of coat solution used to form the gas barrier coating layer, the hardness of the gas barrier coating layer, Si/C of the gas barrier coating layer, and the thickness of the gas barrier coating layer were as shown in Table 1.

### (Example 12)

A gas barrier laminate was obtained in the same manner as in Example 1, except that an AlOₓ film (inorganic oxide layer) was formed on the anchor coat layer, and the type of coat solution used to form the gas barrier coating layer, the hardness of the gas barrier coating layer, and Si/C of the gas barrier coating layer were as shown in Table 2. The AlOₓ film was formed using a vacuum vapor deposition device of the electron beam heating type. Oxygen was introduced so that the pressure became 1.2 x 10⁻² Pa while evaporating an aluminum ingot by electron beam heating.

### (Example 13)

A gas barrier laminate was obtained in the same manner as in Example 1, except that a solvent-free adhesive was used as the adhesive for bonding the gas barrier coating layer and the sealant layer.

### (Example 14)

A gas barrier laminate was obtained in the same manner as in Example 3, except that a solvent-free adhesive was used as the adhesive for bonding the gas barrier coating layer and the sealant layer.

### (Examples 15 and 16)

A gas barrier laminate was obtained in the same manner as in Example 3, except that the thickness of the inorganic oxide layer was changed as shown in Table 2.

### (Comparative Examples 1, 3, and 4)

A first laminate was obtained in the same manner as in Example 1, except that the thickness of the anchor coat layer, the type of coat solution used to form the gas barrier coating layer, the hardness of the gas barrier coating layer, and Si/C of the gas barrier coating layer were as shown in Table 2.

Next, a polypropylene resin film (product name "U-1", biaxially oriented film: OPP, manufactured by Mitsui Chemicals Tohcello, Inc.) with a thickness of 20 µm was prepared as the substrate layer.

Using a two-component urethane adhesive (product name "A525/A52"), this polypropylene resin film was bonded to the surface of the gas barrier coating layer of the first laminate by dry lamination.

Then, using a two-component urethane adhesive (product name "A525/A52"), an unstretched polypropylene film (product name "TORAYFAN ZK207", manufactured by Toray Industries, Inc.) with a thickness of 60 µm was bonded as a sealant layer by dry lamination onto the surface of the intermediate layer on which the barrier layer was not formed.

A gas barrier laminate was thus obtained in which the substrate layer, the gas barrier coating layer, the inorganic oxide layer, the anchor coat layer, the intermediate layer, the adhesive layer, and the sealant layer were laminated in this order.

The hardness of the gas barrier coating layer in the gas barrier laminate thus obtained was determined by a method described below. The results are shown in Table 2.

### (Comparative Example 2)

A gas barrier laminate was obtained in the same manner as in Example 1, except that the thickness of the anchor coat layer, the type of coat solution used to form the gas barrier coating layer, the hardness of the gas barrier coating layer, and Si/C of the gas barrier coating layer were as shown in Table 2.

### (Comparative Example 5)

A gas barrier laminate was obtained in the same manner as in Example 1, except that the IR drying of the coating film of the coat solution 1 was omitted and only oven heat drying was performed in the formation of the gas barrier coating layer, and the hardness of the gas barrier coating layer and Si/C of the gas barrier coating layer were as shown in Table 2.

### (Comparative Example 6)

A gas barrier laminate was obtained in the same manner as in Comparative Example 4, except that a solvent-free adhesive was used as the adhesive for bonding the gas barrier coating layer and the sealant layer.

### <Si/C on the surface of gas barrier coating layer>

The Si/C ratio on the surface of the gas barrier coating layer of the first laminate obtained in the Examples or Comparative Examples was determined as follows.

That is, Si/C was determined by narrow spectrum analysis using the following measuring equipment under the following measuring conditions.

Specifically, first, a narrow spectrum of O1s, N1s, C1s, and Si2p orbitals was collected from the surface of the gas barrier coating layer of the first laminate. Then, the respective peak areas for each of elements O, N, C, and Si were used with the relative sensitivity coefficients of 2.28 eV for O1s, 1.61 eV for N1s, 1.00 eV for C1s, and 0.9 eV for Si2p to determine elemental quantitative values (atomic %).

The Si/C ratio on the surface of the gas barrier coating layer was determined using these element quantitative values.

### <Measuring equipment>

JPS-9030, a photoelectron spectrometer manufactured by JEOL Ltd.

### <Measurement conditions (spectrum collection conditions)>

Incident X-ray: Mg Kα (monochromatic X-ray, hv = 1253.6 eV)
X-ray output: 10 W (10 kV·10 mA)
X-ray scanning area (measurement area): Circular area with a diameter of about 6 mm Photoelectron collection angle: 90°

### <Hardness of gas barrier coating layer in cross section>

The hardness of a cross section of the gas barrier coating layer of the gas barrier laminate obtained in the Examples or Comparative Examples was measured by nanoindentation as follows.

The measurement sample (cross-sectional sample) was prepared as follows. That is, after both sides of the gas barrier laminate were subjected to corona treatment, the gas barrier laminate was embedded in a visible light curable resin (ARONIX LCR D-800, manufactured by Toagosei Co., Ltd.). Then, the gas barrier laminate was cut perpendicularly to the lamination direction thereof using an ultramicrotome (EM UC7, manufactured by Leica) and a diamond knife (LH, manufactured by Microstar). The resulting cross section was subjected to a finishing process under the conditions of a feed of 200 nm and a cutting speed of 1 mm/s to finally obtain a measurement sample.

The measurement was carried out with a Hysitron TI-Premier (product name) manufactured by Bruker Japan as the measuring device, using a diamond Berkovich indenter manufactured by Bruker Japan as the indenter. The measurement conditions were as follows.

### (Measurement conditions)

Temperature: Normal temperature (25°C)
Mode: Load control mode
Indentation and unloading: Indentation was performed up to a load of 15 µN at an indentation rate of 1.5 µN/sec. After maintaining the maximum load for 5 seconds, the indenter was unloaded at a rate of 1.5 µN/sec.
Measurement points: A shape image of the cross section of the gas barrier coating layer is obtained using the shape measurement function of the measuring device that scans the sample surface with an indenter. Using the shape image, 20 points are specified on the cross section of the gas barrier coating layer at intervals of 1 µm or more.

When calculating the hardness, the relationship between the contact depth and the projected contact area between the indenter and the sample was calibrated in advance using fused quartz as a standard sample. After that, the unloading curve in the region of 60 to 95% of the maximum load upon unloading was analyzed by the Oliver-Pharr method to calculate the hardness of the gas barrier coating layer in a cross section. The results are shown in Tables 1 and 2.

### <Evaluation of gas barrier laminate>

### (1) Gas barrier performance after high retort treatment

### (Production of sealed container)

Using the gas barrier laminates obtained as described above, three-sided pouches having an opening were produced. The three-sided pouches were formed by folding the gas barrier laminate so that the folds of the unstretched polypropylene film faced each other, and then heat-sealing them together. The opening of each three-sided pouch was sealed after pouring tap water (city water) through the opening, thereby preparing a sealed container.

### (High retort treatment)

The resulting sealed containers were subjected to heat treatment (retort treatment) at 130°C for 60 minutes.

### (Measurement of oxygen permeability)

A 297 mm x 210 mm test sample was cut out from each sealed container after high retort treatment. The oxygen permeability (cc/m²·day·atm) of this test sample was measured using an oxygen permeability measuring device ("OX-TRAN2/20", manufactured by MOCON) at a temperature of 30°C and a relative humidity of 70%. The measurement was carried out according to JIS K-7126-2. The results are shown in Tables 1 and 2.

### (2) Durability

The gas barrier laminates were subjected to flex test by carrying out a flex test (Gelbo flex test) as described below, and the oxygen permeability after flex test was measured in the same manner as in the measurement of oxygen permeability described above. The durability of the gas barrier laminates was evaluated in this way. The results are shown in Tables 1 and 2.

### (Flex test)

A test sample measuring 297 mm in length and 210 mm in width was cut out from each gas barrier laminate. This test sample was attached to the fixed head of a Gelbo flex tester (manufactured by Tester Sangyo Co., Ltd.) so that it formed a cylinder measuring 87.5 mm in diameter and 210 mm in width. The cylinder was then gripped at both ends, and twisted by 440° with an initial gap of 175 mm and a stroke of 87.5 mm. This reciprocating motion was repeated 10 times at a rate of 40 times/min to bend the cylinder.

**[Table 1]**

| | Anchor coat layer | Inorganic oxide layer | | Gas barrier coating layer | | | | | Adhesive | Evaluation | |
|---|---|---|---|---|---|---|---|---|---|---|---|
| | | | | | | | | | | Gas barrier performance | Durability |
| | Thickness [nm] | Type | Thickness [ nm] | Position relative to intermediate layer | Coat solution type | Hardness [GPa] | Si/C | Thickness [ nm] | Presence of solvent | Oxygen permeability after retort treatment (130C°, 60 min) [cc/m²·day·atm] | Oxygen permeability after Gelbo flex test [cc/m²·day·atm] |
| Ex. 1 | 150 | SiOₓ | 20 | Sealant layer-side | 1 | 0.71 | 0.74 | 300 | Yes | 4 | 10.5 |
| Ex. 2 | - | SiOₓ | 20 | Sealant layer-side | 1 | 0.71 | 0.74 | 300 | Yes | 5 | 12 |
| Ex. 3 | 150 | SiOₓ | 20 | Sealant layer-side | 2 | 0.50 | 0.45 | 300 | Yes | 0.7 | 0.8 |
| Ex. 4 | 100 | SiOₓ | 15 | Sealant layer-side | 3 | 0.35 | 0.30 | 350 | Yes | 0.6 | 0.5 |
| Ex. 5 | 100 | SiOₓ | 15 | Sealant layer-side | 4 | 0.15 | 0.20 | 350 | Yes | 0.5 | 0.3 |
| Ex. 6 | 50 | SiOₓ | 20 | Sealant layer-side | 2 | 0.50 | 0.45 | 300 | Yes | 1.5 | 0.9 |
| Ex. 7 | 300 | SiOₓ | 20 | Sealant layer-side | 2 | 0.50 | 0.45 | 300 | Yes | 2 | 1 |
| Ex. 8 | 150 | SiOₓ | 5 | Sealant layer-side | 2 | 0.50 | 0.45 | 300 | Yes | 6.5 | 1.3 |
| Ex. 9 | 150 | SiOₓ | 80 | Sealant layer-side | 2 | 0.50 | 0.45 | 300 | Yes | 2.5 | 2 |
| Ex. 10 | 150 | SiOₓ | 20 | Sealant layer-side | 2 | 0.50 | 0.45 | 50 | Yes | 7 | 2.5 |
| Ex. 11 | 150 | SiOₓ | 20 | Sealant layer-side | 2 | 0.50 | 0.45 | 700 | Yes | 1.5 | 1.8 |

**[Table 2]**

| | Anchor coat layer | Inorganic oxide layer | | Gas barrier coating layer | | | | | Adhesive | Evaluation | |
|---|---|---|---|---|---|---|---|---|---|---|---|
| | | | | | | | | | | Gas barrier performance | Durability |
| | Thickness [nm] | Type | Thickness [nm] | Position relative to intermediate layer | Coat solution type | Hardness [GPa] | Si/C | Thickness [nm] | Presence of solvent | Oxygen permeability after retort treatment (130C°, 60 min) [cc/m²·day·atm] | Oxygen permeability after Gelbo flex test [cc/m²·day·atm] |
| Ex. 12 | 150 | AlOₓ | 20 | Sealant layer-side | 2 | 0.50 | 0.45 | 300 | Yes | 1.5 | 0.7 |
| Ex. 13 | 150 | SiOₓ | 20 | Sealant layer-side | 1 | 0.71 | 0.74 | 300 | No | 5 | 10 |
| Ex. 14 | 150 | SiOₓ | 20 | Sealant layer-side | 2 | 0.50 | 0.45 | 300 | No | 1.5 | 2 |
| Ex. 15 | 150 | SiOₓ | 30 | Sealant layer-side | 2 | 0.50 | 0.45 | 300 | Yes | 0.6 | 1 |
| Ex. 16 | 150 | SiOₓ | 50 | Sealant layer-side | 2 | 0.50 | 0.45 | 300 | Yes | 2 | 1.5 |
| Comp. Ex. 1 | - | SiOₓ | 20 | Substrate layer-side | 1 | 0.71 | 0.74 | 300 | Yes | 14.5 | 13 |
| Comp. Ex. 2 | 150 | SiOₓ | 20 | Sealant layer-side | 5 | 0.78 | 0.80 | 300 | Yes | 14 | 15 |
| Comp. Ex. 3 | 150 | SiOₓ | 20 | Substrate layer-side | 5 | 0.78 | 0.80 | 300 | Yes | 15 | 15.5 |
| Comp. Ex. 4 | 150 | SiOₓ | 20 | Substrate layer-side | 2 | 0.50 | 0.45 | 300 | Yes | 8.5 | 1.0 |
| Comp. Ex. 5 | 150 | SiOₓ | 20 | Sealant layer-side | 1 | 0.84 | 0.74 | 300 | Yes | 14.5 | 23 |
| Comp. Ex. 6 | 150 | SiOₓ | 20 | Substrate layer-side | 2 | 0.50 | 0.45 | 300 | No | 8 | 1 |

The results shown in Tables 1 and 2 indicate that all of the gas barrier laminates of the Examples had sufficiently low oxygen permeability after high retort treatment and also had sufficiently low oxygen permeability after the Gelbo flex test.

This confirms that the gas barrier laminate of the present disclosure can have good durability and maintain good gas barrier performance even after high retort treatment.

### [Reference Signs List]

- 1: Substrate layer
- 2: Intermediate layer
- 3: Inorganic oxide layer
- 4: Gas barrier coating layer
- 5: Barrier layer
- 6: Anchor coat layer
- 20: Gas barrier laminate
- 21: Sealant layer
- 30: Packaging container
- 40: Packaged product
- C: Contents

## Claims

1. A gas barrier laminate comprising a substrate layer, an intermediate layer, a barrier layer, and a sealant layer in this order,
wherein the substrate layer, the intermediate layer, and the sealant layer are each made of a resin film,
the barrier layer has a gas barrier coating layer, and
a hardness of the gas barrier coating layer in a cross section as measured by nanoindentation is less than 0.75 GPa.

2. The gas barrier laminate according to claim 1, wherein the hardness of the gas barrier coating layer in the cross section as measured by nanoindentation is 0.1 GPa or more.

3. The gas barrier laminate according to claim 1, wherein the resin film includes a polypropylene-based resin, and
the resin films comprising the substrate layer and the intermediate layer among the substrate layer, the intermediate layer, and the sealant layer are each comprised of a stretched film.

4. The gas barrier laminate according to claim 1, wherein an atomic ratio of silicon atoms to carbon atoms (Si/C) on a surface of the gas barrier coating layer as measured by X-ray photoelectron spectroscopy (XPS) is less than 0.80.

5. The gas barrier laminate according to claim 4, wherein an atomic ratio of silicon atoms to carbon atoms (Si/C) on a surface of the gas barrier coating layer as measured by X-ray photoelectron spectroscopy (XPS) is less than 0.50.

6. The gas barrier laminate according to claim 1, wherein the gas barrier coating layer is formed using a composition for forming the gas barrier coating layer that contains a first silicon compound and a water-soluble macromolecule, and the first silicon compound includes at least one of a silane alkoxide represented by a following general formula (1) and a hydrolysate thereof.
Si(OR¹)₄ ......(1)
(In the general formula (1), R¹ represents an alkyl group.)

7. The gas barrier laminate according to claim 6, wherein the composition for forming the gas barrier coating layer further contains a second silicon compound, and
the second silicon compound includes at least one of a silane coupling agent represented by a following general formula (2) and a hydrolysate thereof.
(R²Si(OR³)₃)ₙ ......(2)
(In the above general formula (2), R² represents a monovalent organic group, R³ represents an alkyl group or -C₂H₄OCH₃, and n represents an integer greater than or equal to 1.)

8. The gas barrier laminate according to claim 1, wherein the gas barrier coating layer has a thickness of more than 50 nm and less than 700 nm.

9. The gas barrier laminate according to claim 1, wherein the barrier layer further includes an inorganic oxide layer between the intermediate layer and the gas barrier coating layer.

10. The gas barrier laminate according to claim 9, wherein the inorganic oxide layer has a thickness of more than 5 nm and less than 80 nm.

11. The gas barrier laminate according to claim 9, further comprising an anchor coat layer between the intermediate layer and the inorganic oxide layer.

12. The gas barrier laminate according to 11, wherein the anchor coat layer has a thickness of more than 50 nm and less than 300 nm.

13. A packaging container comprising the gas barrier laminate according to any one of claims 1 to 12.

14. A packaged product comprising the packaging container according to claim 13 and contents sealed in the packaged container.
